# EUROPÄISCHE PATENTSCHRIFT

(11) **EP 4 149 029 B1**
(45) Veröffentlichungstag und Bekanntmachung des Hinweises auf die Patenterteilung: **30.10.2024**
(21) Anmeldenummer: 22194311.1
(22) Anmeldetag: 07.09.2022
(51) Int. Cl.: H04J 3/06, G06F 1/14, G06F 1/12, G05B 19/00

(54) **ZEITSYNCHRONISATION IN EINEM NETZWERK**
TIME SYNCHRONIZATION IN A NETWORK
SYNCHRONISATION TEMPORELLE DANS UN RÉSEAU

(30) Priorität: 10.09.2021 AT 507152021
(43) Veröffentlichungstag der Anmeldung: 15.03.2023
(73) Patentinhaber: B&R Industrial Automation GmbH, 5142 Eggelsberg (AT)
(72) Erfinder: Bruckner, Dietmar, 5142 Eggelsberg (AT); Höftberger, Oliver, 5142 Eggelsberg (AT); Zelenka, Jörg, 5142 Eggelsberg (AT); Profelt, Franz, 5142 Eggelsberg (AT)
(74) Vertreter: Patentanwälte Pinter & Weiss OG

(56) Entgegenhaltungen:
- EP-A1- 3 288 200
- US-A- 5 530 846
- US-A1- 2010 172 453
- US-A1- 2015 127 978
- US-B2- 7 876 790
- FERRARI P ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, vol. 6, no. 3, 1 August 2010 (2010-08-01), pages 381 - 392, XP011334330, ISSN: 1551-3203, DOI: 10.1109/TII.2010.2051954
- KERO NIKOLAUS ET AL: "Performance and Reliability Aspects of Clock Synchronization Techniques for Industrial Automation", PROCEEDINGS OF THE IEEE, IEEE. NEW YORK, US, vol. 107, no. 6, 1 June 2019 (2019-06-01), pages 1011 - 1026, XP011725978, ISSN: 0018-9219, [retrieved on 20190529], DOI: 10.1109/JPROC.2019.2915972

## Beschreibung

Die gegenständliche Erfindung beschreibt ein Verfahren zur Zeitsynchronisation in einem Netzwerk, wobei das Netzwerk eine Mehrzahl an Mastern und zumindest einen Slave enthält, wobei der zumindest eine Slave von der Mehrzahl an Mastern Synchronisationsnachrichten zur Zeitsynchronisation einer ersten Uhr und einer zweiten Uhr des Slaves über das Netzwerk erhält, wobei ein erster Master eine erste Synchronisationsnachricht mit einem ersten Zeitstempel zur Zeitsynchronisation der ersten Uhr an den zumindest einen Slave sendet und der zumindest eine Slave den ersten Zeitstempel der ersten Synchronisationsnachricht mit der ersten aktuellen Zeit der ersten Uhr vergleicht und auf Basis dieses Vergleichs eine Taktrate und eine Zeitdifferenz der ersten Uhr zum ersten Master ermittelt und ein Zeitabgleich durchführt, wodurch die erste Uhr im Slave mit einer synchronisierten Zeit läuft, wobei ein zweiter Master eine zweite Synchronisationsnachricht mit einem zweiten Zeitstempel zur Zeitsynchronisation der zweiten Uhr an den zumindest einen Slave sendet.

Prinzipiell können ganz verschiedene Hardwarekomponenten, wie zentrale Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren, Netzwerk-Infrastruktur (Switches, Bridges etc.) usw., als Netzwerkteilnehmer eines Netzwerks vorgesehen sein. Jeder Netzwerkteilnehmer in einem Netzwerk hat zumindest eine Uhr, über welche die Arbeitsabläufe im Netzwerkteilnehmer selbst gesteuert werden. Diese Uhr kann beispielsweise die beanspruchbare CPU-Rechendauer eines jeden Prozesses vorgeben. Auch Arbeitsabläufe zwischen Netzwerkteilnehmern im Netzwerk werden über die Uhr abgeglichen. Damit kann die Steuerung von verschiedenen Prozessen in einem Netzwerk realisiert werden.

Man unterscheidet prinzipiell hardwarebasierte Uhren von logischen Uhren. Hardwarebasierte Uhren sind beispielsweise Quarzoszillatoren mit Zählregister, wobei der Quarzoszillator regelmäßige Schwingungen vorgibt, die dann vom Zählregister erfasst werden. Diese weisen eine Abhängigkeit von physikalischen Größen wie Temperatur, Luftdruck, Umgebungsfeuchte etc. auf. Daher kann der Standort eines Netzwerkteilnehmers Auswirkungen auf den Quarzoszillator haben und diese Veränderungen können in unterschiedlichen Takt- oder Frequenzraten einer hardwarebasierten Uhr resultieren. Während sich daraus für einen isolierten Netzwerkteilnehmer oftmals keine Konsequenz ergeben kann, kann im Netzwerk eine Zeitsynchronisation zwischen Uhren verschiedener Netzwerkteilnehmer, welche mit unterschiedlicher Taktrate laufen, erforderlich werden.

Bei einer logischen Uhr, kommt das Taktsignal über eine Unterbrechungsanforderung von der Hardware, wie einer hardwarebasierten Uhr. Die logische Uhr muss also nach dem Einschalten eines Netzwerkteilnehmers erst eingestellt werden. Eine logische Uhr ist eine Komponente eines Computersystems, welche dafür verwendet werden kann, Ereignisse, wie Arbeitsabläufe in einem Netzwerk, einen eindeutigen Zeitstempel zu geben.

Durch einen Zeitstempel wird einem Ereignis ein eindeutiger Zeitpunkt zugeordnet. Die Genauigkeit dieses Zeitstempels hängt maßgeblich von der Genauigkeit einer Uhr ab. Ereignisse sind beispielsweise verschiedene physikalische Arbeitsabläufe in einer Produktionsanlage, können aber auch digitaler Natur sein, wie die Kommunikation zwischen verschiedenen Netzwerkteilnehmern. Als physikalische Arbeitsabläufe können beispielsweise Bewegungen von Maschinenteilen oder Gütern z.B. auf einer Maschine ablaufen. Die physikalischen Arbeitsabläufe können von als Aktoren ausgelegten Netzwerkteilnehmern initiiert oder ausgeführt werden und von als Sensoren ausgelegten Netzwerkteilnehmern erfasst werden. So kann man beispielsweise bei Ausfall der Produktion genau sagen, welche Maschine zu welchem Zeitpunkt für einen Ausfall verantwortlich war. Das erleichtert maßgeblich die Fehlersuche in hochkomplexen Produktionssystemen.

Oftmals kann es nicht nur eine Uhr in einem Netzwerkteilnehmer geben, sondern auch eine Mehrzahl an Uhren. Die Uhren können sowohl als hardwarebasierte als auch logische Uhren ausgestaltet sein oder auch Kombinationen davon sein. Beispielsweise können zwei logische Uhren auf die gleiche hardwarebasierte Uhr zurückgreifen. Meist ist in einem Netzwerkteilnehmer zumindest eine hardwarebasierte Uhr eingebaut, welche zumindest jeweils eine Arbeitszeit im Netzwerkteilnehmer angibt. Solch eine Arbeitszeit zählt im Regelfall von einer ersten Initialisierung an durchgehend weiter, beispielsweise in Bruchteilen von Sekunden. Der Quarzoszillator wirkt in einer solchen Uhr als Taktgeber. Damit diese Uhr nicht stehenbleibt, wenn das Gerät ausgeschaltet wird, kann die Uhr ständig von einem Energiespeicher, also einer Batterie oder einem Akku, versorgt werden. Bei Spannungsverlust, beispielsweise bei leerer Knopfbatterie am Motherboard, würde diese Uhr dann von Neuem zu zählen beginnen, wenn eine neue Spannungsquelle eingesetzt wird.

Eine logische Uhr nutzt jetzt beispielsweise die oben genannte hardwarebasierte Uhr, um Arbeitsabläufe zu steuern und Ereignissen einen Zeitstempel zu geben.

In einem Netzwerk kann es zu nicht vermeidbaren Ungenauigkeiten kommen, beispielsweise weil die verbauten Quarzoszillatoren aufgrund von Fabrikationsungenauigkeiten nicht mit exakt gleicher Frequenz schwingen. Weiters können verschiedene Standorte der Netzwerkteilnehmer, dazu führen, dass der Frequenzunterschied in den Quarzoszillatoren aufgrund äußerer Einflüsse entsteht oder noch zunimmt. Netzwerkteilnehmer können gemeinsam in einer Maschinenhalle stehen, oder aber auch räumlich weit voneinander getrennt sein. Beispielsweise können Temperaturunterschiede bedingt durch unterschiedliche Außentemperaturen, Klimatisierung, CPU-Erwärmung einen Einfluss auf den Quarzoszillator haben.

Um eine zeitgesteuerte Kommunikation mittels verschiedener Netzwerkteilnehmer zu ermöglichen, ist es nötig, Uhren, welche eine unterschiedliche Zeit aufweisen, aneinander abzugleichen. Im einfachsten Fall wird dazu ein Netzwerkteilnehmer im Netzwerk zu einem sogenannten Master ernannt und die anderen Netzwerkteilnehmer zu sogenannten Slaves. Ein Netzwerkteilnehmer, welcher ein Master ist, kann ein besonders leistungsstarker und ausfallssicherer Netzwerkteilnehmer sein. Der Master gibt dann die Zeit den Slaves im Netzwerk vor und regelt damit die Zeitsynchronisation. Im Regelfall gibt es mehrere Master in einem Netzwerk. Es gibt für jede Uhrzeit einen Master bezüglich der Zeitsynchronisation. Bei zwei Uhren gibt es folglich auch zwei Master. Diese können zwar auf einem physischen Netzwerkteilnehmer sein, können aber auch auf unterschiedlichen Netzwerkteilnehmer aufgeteilt sein. Es kann auch möglich sein, dass die Masterrollen zwischen Netzwerkteilnehmern regelmäßig wechseln.

Oftmals gibt es in einem Netzwerk aber nicht nur einen Master für eine Uhr, sondern eine Mehrzahl an Mastern, sogenannte "Standby-Master". Solange der ursprüngliche Master die Zeitsynchronisation bezüglich einer Uhr durchführt, verhalten sich die Standby-Master wie Slaves. So kann, wenn der erste Master ausfällt, einer der Standby-Master übernehmen und die Zeitsynchronisation durchführen.

Oftmals verwenden die Netzwerkteilnehmer als Zeit eine sogenannte Arbeitszeit, welche durchgehend ab Initialisierung des Systems weiterläuft. Es ist aber bei Netzwerkteilnehmern nicht nur wichtig die Arbeitszeit abzugleichen, sondern es wird oftmals auch eine Globale Zeit benötigt. Unter Globaler Zeit versteht man insbesondere die für den Menschen regulär wahrgenommene Zeit mit einem Datum und einer Uhrzeit. Solch eine Globale Zeit kann für Anwender, beispielsweise Mitarbeiter in Produktionsstätten wichtig sein, z.B. bei Wartung, Inbetriebnahme und Fehlersuche bei einem Netzwerteilnehmer in einem Netzwerk. Dazu kann, wie bei der Arbeitszeit bekannt, ein Netzwerkteilnehmer wieder zu einem Master ernannt werden und die anderen sind Slaves, welche eine Zeitsynchronisation vom Master erhalten. Für die Globale Zeit kann sich ein Master entweder über das Internet mit einem Server der koordinierten Weltzeit (UTC) oder der internationalen Atomzeit (franz. TAI), oder auch über Funk oder GPS, abstimmen.

Weiters können Master für die Zeitsynchronisation hinsichtlich anderer Aufgaben nur einfache Netzwerkteilnehmer oder Slaves sein. Die Ausdrücke "Master" und "Slave" beziehen sich in der gegenständlichen Erfindung ausschließlich auf die Zeitsynchronisation in einem Netzwerk und nicht auf andere Funktionalitäten, wie beispielsweise in einem Produktionsprozess.

Die Master zur Zeitsynchronisation der Arbeitszeit und der Globalen Zeit sind üblicherweise nicht ident in einem Netzwerk. Somit kann für die Netzwerkteilnehmer jeweils eine separate Zeitsynchronisation auf die Arbeitszeit und auf die Globale Zeit von unterschiedlichen Mastern vorgesehen sein. Hierzu sind Zeitsynchronisationsverfahren bekannt, die auf umfangreichen Software-Stacks basieren, wie es beispielsweise im Precision Time Protocol (PTP) vorgesehen ist. Solche Protokolle sind beispielsweise in Standard IEEE 802.1AS-2020 gegeben. Dabei werden Arbeitszeit und Globale Zeit jeweils separat abgeglichen. Im Regelfall können mehrere redundante Master, sowohl Arbeitszeit als auch Globale Uhrzeit vorgeben.

Im Regelfall erfolgt ein solcher Abgleich über eine Synchronisation. Dabei wird eine vollständige Anpassung der Zeit, entweder Arbeitszeit oder Globaler Zeit, zwischen Master und Slave vorgenommen. Der Slave gleicht die Taktrate als auch die Zeitdifferenz ab. Unter Zeitdifferenz versteht man den konkreten Unterschied zwischen Uhr des Masters und des Slaves. Ein Master hat beispielsweise eine Globale Uhrzeit von 13:02, und ein Slave von 13:05. Jetzt wird die Uhrzeit des Slaves von 13:05 auf 13:02 gestellt und der Slave gleicht aufgrund der Kenntnis über die Zeit im Master die Taktrate ab, damit die Uhren gleich schnell laufen. Ein genauer Abgleich der Taktraten kann erst nach einer gewissen Anzahl an Synchronisationsnachrichten möglich sein.

Um Zeitsprünge möglichst zu vermeiden, kann die Taktrate des Slaves beschleunigt oder verzögert werden, damit die Uhren in Master und Slave sich abgleichen. Dieser Prozess kann bei hohen Abweichungen von Master und Slave jedoch lange dauern und zu anhaltenden Fehlern vor allem in der Taktrate führen. Wenn eine Zeit andererseits sprunghaft angepasst wird, kann es passieren, dass es zu Fehlern in den Zeitstempeln kommt. Ereignisse, welche tatsächlich zeitlich hintereinander abgelaufen sind, weisen nach der Zeitsynchronisation gleiche Zeitstempel auf, oder die protokollierte Abfolge dieser Ereignisse kann sogar vertauscht werden.

Es kann aber ein Abgleich auch über Syntonisation erfolgen. Unter Syntonisation versteht man die alleinige Anpassung der Taktrate zwischen einem Master und einem Slave in einem Netzwerk, ohne dass ein Abgleich einer Zeitdifferenz, wie bei der Synchronisation verwendet wird. So würden die Uhrzeiten wie im obigen Bespiel nicht auf die Uhrzeit des Masters mittels Sprungs korrigiert werden, sondern die Uhrzeiten würden mit gleicher Differenz weiterlaufen oder mit beschleunigter oder verzögerter Taktrate aneinander abgeglichen werden. Das verhindert Sprünge in der Uhr und vermeidet auch die falsche Zuordnung von Ereignissen. Jedoch wird dadurch zumindest verhindert, dass die Differenz größer wird, wenn beide Uhren dieselbe Taktrate haben. Im erfindungsgemäßen Abgleich kann im Folgenden sowohl Synchronisation als auch Syntonisation vorgesehen sein. Das kann abhängig von der Differenz des zumindest einen Slaves zum Master sein und vom Anwendungsbereich.

Die Arbeitszeit und die Globale Zeit werden im Regelfall über unterschiedliche Master abgeglichen. Als Folge kann es passieren, dass diese beiden Zeiten unterschiedlich schnell laufen, also eine abweichende Taktrate aufweisen. Ereignisse können sowohl Zeitstempel der Arbeitszeit als auch der Globalen Zeit aufweisen, z.B. abhängig davon, ob ein Ereignis einen Produktionsablauf darstellt und eine Kommunikation zwischen Netzwerkteilnehmem erforderlich ist oder eine Interaktion mit einem Anwender stattfindet.

Der Stand der Technik für die Zeitsynchronisation ist heutzutage der PTP-Standard der IEEE. Dieser sieht vor, dass jede Uhr in einem Netzwerkteilnehmer über das Netzwerk separat mit einem Master synchronisiert wird. Beispielsweise kann eine Arbeitsuhr auf Basis des Standards mit anderen Arbeitsuhren im Netzwerk abgeglichen werden. Dasselbe Prozedere kann für eine Globale Uhr durchgeführt werden. Das heißt es werden der Uhr beispielsweise Taktrate und eine Zeitdifferenz vorgegeben. Somit können aber unterschiedliche Uhren in einem Netzwerkteilnehmer mitunter unterschiedliche Taktraten aufweisen. Wenn ein Netzwerkteilnehmer mit weiteren Netzwerkteilnehmern, beispielsweise mit anderen Slaves oder mit einem Master im Netzwerk kommuniziert, kann das zu einer nicht mehr nachverfolgbaren Anhäufung von Fehlern in der Zeitprotokollierung führen.

Viele bestehende Applikationen nutzen eine dieser beiden Uhren zur Kontrolle von Zeitabläufen (beispielsweise als Timer für die Ausführung bestimmter Ereignisse). Da im Stand der Technik jede dieser Uhren mit der Taktrate eines Masters synchronisiert werden, läuft die Kontrolle der Zeitabläufe nicht mit der Taktrate einer einzigen Uhr, was für die netzwerkweit gleich getaktete Ausführung von Ereignissen notwendig wäre.

EP 2 544 389 B1 offenbart eine Zeitsynchronisation von Arbeitszeit und Globaler Zeit, wobei die Differenz dieser beiden Zeiten erfasst wird, und die Differenz mittels Nachricht von einem Master an einen Teilnehmer im System weitergegeben wird und der Slave seine Zeiten korrigiert. Durch die Differenz werden die Uhren aneinander angepasst. Nachteil dieses Verfahrens ist, dass es einen gemeinsamen Master für beide Uhren geben muss. Weiters erfordert dieses Verfahren zusätzliche Informationen, die übertragen werden müssen. D.h. alle Komponenten im Netzwerk müssen dasselbe Verfahren anwenden.

Aus der EP 3 288 200 A ist weiterhin ein Verfahren zum Synchronisieren von Master- und Slave-Uhren in einem Computernetzwerk bekannt, bei welchem eine erste und eine zweite Slave-Uhr eines lokalen Netzwerkknoten jeweils auf eine erste und zweite Master-Uhr eines Remote-Netzwerkknotens synchronisiert werden. Der lokale Netzwerkknoten erhält dazu Informationen von einer ersten Zeit einer ersten Master-Uhr und von einer zweiten Zeit einer zweiten Master-Uhr vom Remote-Netzwerkknoten. Diese Zeiten werden dann zum Synchronisieren der ersten bzw. zweiten Slave-Uhr verwendet, indem die Zeit für die erste Slave-Uhr in Abhängigkeit von einer aktuellen Zeit, den Informationen über die erste Zeit sowie ersten Verzögerungsinformationen, welche die Übertragungszeit der ersten Zeit zum lokalen Netzwerkknoten charakterisiert, und einer ersten Kompensation für eine erste Frequenzdrift zwischen erster Master-Uhr und erste Slave-Uhr bestimmt wird, und indem die Zeit der zweiten Slave-Uhr in Abhängigkeit von der aktuellen Zeit der ersten Slave-Uhr, Informationen über die zweite Zeit, Verzögerungsinformationen, welche die zweite Übertragungszeit der zweiten Zeit zum lokalen Knoten charakterisiert, und einer zweiten Kompensation einer zweiten Frequenzdrift zwischen der zweiten Master-Uhr und der ersten Slave-Uhr bestimmt wird.

Die Aufgabe der gegenständlichen Erfindung ist es, eine einheitliche Zeitsynchronisation für verschiedene Applikationen im Betrieb zu ermöglichen.

Die Aufgabe der gegenständlichen Erfindung wird dadurch gelöst, dass die Taktrate der ersten Uhr genutzt wird, um der zweiten Uhr eine Taktrate vorzugeben, indem die Taktrate der zweiten Uhr auf die Taktrate der ersten Uhr gesetzt wird. Dann vergleicht der zumindest eine Slave den zweiten Zeitstempel der zweiten Synchronisationsnachricht mit der zweiten aktuellen Zeit der zweiten Uhr, ermittelt auf Basis dieses Vergleichs eine Zeitdifferenz der zweiten Uhr zum zweiten Master und führt einen Zeitabgleich derart durch, dass dadurch die zweite Uhr im Slave mit der synchronisierten Zeit läuft.

Das ist vorteilhaft, da oftmals Standardmechanismen in Hardware und Betriebssystem vorgegeben sind, die einer Applikation eine fixe Uhr in einem Netzwerkteilnehmer zuordnen. Vor allem unter Linux-basierten Systemen werden Applikationen, wie ein Timer oder eine "monotonic clock", an die Globale Uhrzeit assoziiert. Das kann vor allem in komplexen Produktionsabläufen zu Problemen führen, da viele Netzwerkteilnehmer unterschiedliche Uhren für die Applikationen, wie beispielsweise den Timer, verwenden oder sogar nur eine Uhr im System besitzen, welche dann im Regelfall eine Arbeitsuhr ist. Weiters kann es bei der Globalen Uhr manchmal zu Unterbrechungen kommen, da diese standardmäßig beim assoziierten Master mit der TAI oder UTC über GPS synchronisiert wird.

Man könnte manuell für jede Applikation die bevorzugte Uhr einstellen, jedoch ist das mit sehr hohem Aufwand verbunden. Weiters geht dadurch der Vorteil einer zweiten Uhr, wie der Globalen Uhr, verloren, welche für Loggingeinträge, Zertifikate oder Fehlermeldungen wertvoll sein kann. Daher ist es vorteilhaft, dass die für das Netzwerk wichtigen Abläufe über die Arbeitsuhr gesteuert werden, aber die Globale Uhr dennoch vorhanden ist und verwendet werden kann.

Die erfindungsgemäße Zeitsynchronisation betrifft ein Netzwerk mit unterschiedlichen Netzwerkteilnehmern. Ein Netzwerkteilnehmer kann beispielsweise ein PC zur Steuerung eines Prüfstandes, einer Fertigungsmaschine, eines Transportsystems, aber auch Bus-Module, Antriebsmodule, Bus-Koppler, IO-Module mit integrierter Netzwerk-Anbindung, Kamera, HMI-Geräte, Netzwerkintegrierte Sensoren und Aktoren, Netzwerk-Infrastruktur (Switches, Bridges etc.) sein. Es gibt in jedem Netzwerk eine Mehrzahl an Mastern für die Zeitsynchronisation Dabei ist für jede Uhr eine Masterrolle vorgesehen. Die Masterrollen können auf einem physischen Netzwerkteilnehmer vorhanden sein, es können die Masterrollen aber auch auf verschiedene Netzwerkteilnehmer verteilt sein.

Andere Uhren in den Netzwerkteilnehmern fungieren dann als Slaves bezüglich der Zeitsynchronisation. Erfindungsgemäß gibt es zumindest eine erste Uhr und eine zweite Uhr im Slave. Diese können eine unterschiedliche Zeitbasis haben, wie beispielsweise eine bei einer klassischen Uhrzeit, Tage und Stunden, oder eine Uhr kann auch nur ab einem Initialisierungszeitpunkt in Sekunden oder in Bruchteilen von Sekunden (z.B. Mikro- oder Nanosekunden) weiterzählen. Die Slaves erhalten Synchronisationsnachrichten von der Mehrzahl an Mastem, um eine Synchronisation durchzuführen. Ein Master kann oftmals auch von anderen "Standby"-Mastern unterstützt werden. Solange der Master aktiv die Zeitsynchronisation vorgibt, agieren die Standby-Master wie Slaves. Im Falle eines Ausfalls der Kommunikation zum Master können die Standby-Master die Zeitsynchronisation übernehmen. Ein Netzwerkausfall kann beispielsweise einen datentransferbasierten Grund haben oder auch einen physikalischen, z.B. durch Durchtrennen einer Leitung, beispielsweise bei Bauarbeiten.

Als Uhrzeiten können beispielsweise eine Arbeitszeit und eine Globale Uhrzeit in einem Netzwerk vorgesehen sein. Dann läuft eine erste Uhr beispielsweise als Arbeitsuhr mit einer Arbeitszeit, und eine zweite Uhr als Globale Uhr mit einer Globalen Uhrzeit. Prinzipiell können aber auch noch andere Zeiten vorkommen, wie eine Produktionszeit, eine Chargenzeit und ähnliches. Eine Arbeitszeit ist oftmals ein Skalar, welche beispielsweise ab einem Initialisierungszeitpunkt fortzählt. Das kann zu Zahlen führen, die umständlich zu lesen und auszuwerten sind, da keine standardisierte Zeitdarstellung für die Arbeitszeit angewandt werden kann. Daher kann eine Globale Uhrzeit, im Gegensatz zur Arbeitszeit oftmals benutzerfreundlich gestaltet sein und eine lesbare Zeit mit Datum und Uhrzeit angeben. Als Globale Uhrzeiten können beispielsweise die koordinierte Weltzeit (UTC) oder die internationale Atomzeit (franz. TAI) im Netzwerk benutzt werden. Dabei nutzt ein Master beispielsweise eine GPS-Verbindung, um sich mit der TAI oder der UTC abzugleichen. Falls verschiedene Teile eines Netzwerks unterschiedliche Globale Uhrzeiten verwenden, kann durch eine "Konversion" zwischen diesen verschiedenen Globalen Uhrzeiten umgerechnet werden. Diese Umrechnung der verschiedenen Globalen Uhrzeiten kann beispielsweise über einen Portable Operating System Interface (POSIX) basierten Algorithmus laufen. ISO 8601:2004 beschreibt dabei beispielsweise die Umrechnung von TAI in UTC.

Erfindungsgemäß erhält ein Slave eine erste Synchronisationsnachricht vom ersten Master, mit welcher in einem ersten Schritt die Arbeitsuhr im Slave synchronisiert wird. Ein Zeitsprung kann beispielsweise nach Starten eines Netzwerkteilnehmers nötig sein, da dann eine hohe Zeitdifferenz vorhanden ist. Die synchronisierte Taktrate der Arbeitsuhr wird benutzt, um der Globalen Uhr im Slave die Taktrate vorzugeben. Die Globale Uhr wird aber noch durch die zweite Synchronisationsnachricht des zweiten Masters aktualisiert und beispielsweise an die TAI angeglichen. Folglich ist die Globale Uhrzeit zu den Zeitpunkten der Synchronisationsnachricht korrekt, kann aber durch die Vorgabe der Taktrate der Arbeitsuhr zwischen den Synchronisationsnachrichten leichte Abweichungen haben. Da die Globale Uhr aber mehrmals pro Sekunde synchronisiert wird, kann diese Abweichung für Applikationen mit Benutzerinteraktion irrelevant sein. Solche Unterschiede sind im unteren Mikrosekundenbereich und kleiner, und werden für einen Meschen im Regelfall als zeitgleich wahrgenommen.

Eine vorteilhafte Zeitsynchronisation erfolgt in Intervallen zwischen 10 - 200 ms.

Beispielsweise wird eine Zeitsynchronisation regelmäßig im bevorzugten Bereich von 10 - 200 ms durchgeführt. Es sind aber auch unregelmäßige Intervalle denkbar. Beispielsweise kann die Zeitsynchronisation, während eines Produktionsprozesses intensiviert werden, und ansonsten mit einem anderen Intervall laufen, oder es können Unregelmäßigkeiten durch Tausch einer Masterrolle im Netzwerk auftreten.

In einer vorteilhaften Ausführung kann ein Slave auch Timestamper enthalten, welcher mit einer ersten Uhr und/oder mit einer zweiten Uhr assoziiert ist, und einem Datenpaket einen Zeitstempel zuordnet.

Solche Timestamper weisen einem ausgehenden Ereignis einen Zeitstempel der assoziierten Uhr zu. Das kann beispielsweise vorteilhaft für gezielten Datenverkehr mittels Datenpakete im Produktionsablauf sein, wobei ein Ereignis dann den Zeitstempel der assoziierten Uhr erhält, wie einer Arbeitsuhr.

In einer vorteilhaften Ausführungsform kann eine Zeitsynchronisation im zumindest einen Slave über Synchronisation erfolgen und eine Taktrate und eine Zeitdifferenz errechnet werden, und die Zeitdifferenz der ersten Uhr und/oder zweiten Uhr zum Master über einen Zeitsprung und/oder einen Frequenzabgleich ausgeglichen wird.

Eine Synchronisation ist vorteilhaft, wenn die Taktrate und die Zeitdifferenz von zwei Uhren abgeglichen werden. Dann zeigen zwei Uhren, beispielweise eine Arbeitsuhr und eine Globale Uhr die gleiche Zeit an.

In einer weiteren vorteilhaften Ausführungsform kann eine Zeitsynchronisation im zumindest einen Slave über Syntonisation erfolgen und eine Taktrate und eine Zeitdifferenz errechnet werden, und die Zeitdifferenz der ersten Uhr und/oder zweiten Uhr zum Master über eine Anpassung der Taktrate ausgeglichen werden.

Eine Syntonisation kann ausreichend sein, wenn zwei Uhren die gleiche Taktrate haben sollen, es aber nicht nötig ist die Differenz abzugleichen. Es können verschiedenste Uhrzeiten in einem Netzwerk mit einer Vielzahl an Netzwerkteilnehmern abgeglichen werden. Bevorzugterweise sendet die Mehrzahl an Mastern für jede Uhr eine Synchronisationsnachricht, beispielsweise 8-mal oder 32-mal pro Sekunde.

In einer bevorzugten Ausführungsform ist ein Timer mit einer ersten Uhr und/oder mit einer zweiten Uhr assoziiert und gibt in regelmäßigen Intervallen eine Unterbrechungsanforderung (UA) aus.

Ein Timer kontrolliert zyklische Abläufe in einem System, in dem er in regelmäßigen Intervallen (beispielweise 1 Millisekunde, ms) eine Unterbrechungsanforderung (Interrupt) ausgibt. Das kann für gegenwärtige und zukünftige Ereignisse wichtig sein, welche mittels einer vordefinierten Unterbrechungsanforderung des Timers ausgelöst werden sollen. Bei erfindungsgemäßer Zeitsynchronisation kann ein Timer sowohl mit der Arbeitsuhr, als auch mit der Globalen Uhr assoziiert sein, und gibt korrekte Unterbrechungsanforderungen aus.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1. ein Flussdiagramm zur Zeitsynchronisation im Stand der Technik,
Fig.2. ein Flussdiagramm zur erfindungsgemäßen Zeitsynchronisation,
Fig.3. eine schematische Zeitsynchronisation der Uhren im Slave im Stand der Technik,
Fig.4. eine schematische erfindungsgemäße Zeitsynchronisation der Uhren im Slave, und
Fig.5 die Funktionsweise eines Timers in einem Netzwerk mit erfindungsgemäßer Zeitsynchronisation.

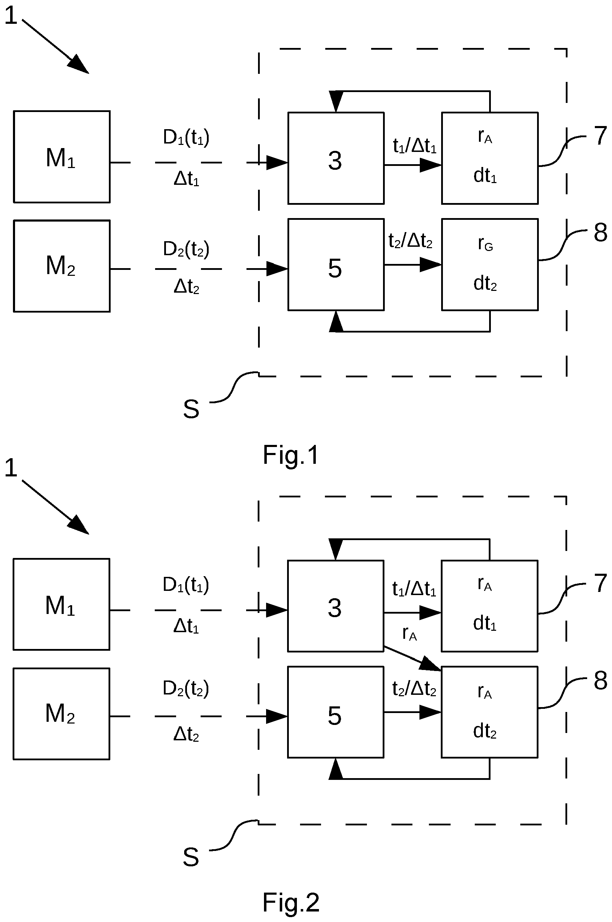

Fig.1 zeigt ein Verfahren nach dem Stand der Technik zum Datentransfer für eine Zeitsynchronisation in einem Netzwerk 1 mit Netzwerkteilnehmern. Es werden in einem Netzwerk 1 verschiedene Rollen zur Zeitsynchronisation verteilt. Es gibt in einem Netzwerk 1 Netzwerkteilnehmer mit der Rolle des Masters M und des Slaves S. Erfindungsgemäß sind zumindest zwei Uhren vorgesehen. Es können aber auch eine Mehrzahl an Uhren vorhanden sein und einer Zeitsynchronisation unterliegen. Es gibt bei erfindungsgemäßer Zeitsynchronisation zumindest eine erste Uhr und eine zweite Uhr. Die erste Uhr läuft mit einer ersten Zeit, und die zweite Uhr mit einer zweiten Zeit.

Zur Veranschaulichung werden repräsentativ eine Arbeitsuhr 3 für eine erste Uhr und eine Globale Uhr 5 für eine zweite Uhr dargestellt. Es könnten aber auch ganz andere Uhren in einem Netzwerk und auf Netzwerkteilnehmern laufen, beispielsweise eine Produktionsuhr, eine Chargenuhr, etc. Zur Synchronisation wird für die Arbeitszeit die Rolle eines Masters M1 und für die Globale Uhrzeit die Rolle eines Masters M2 vergeben. Prinzipiell können beide Master M1 und M2 auf demselben Netzwerkteilnehmer ausgeführt werden, sind aber oftmals auf unterschiedliche Netzwerkteilnehmer verteilt. Alle anderen Arbeitsuhren 3 und Globale Uhren 5 in einem Netzwerk werden dann als Slave-Uhren betrachtet. Erfindungsgemäß enthält ein Slave S eine Arbeitsuhr 3, welche eine erste Zeit als Arbeitsuhrzeit ausgibt, und eine Globale Uhr 5, welche eine zweite Zeit als Globale Uhrzeit ausgibt. Die Globale Uhrzeit kann im Regelfall die Uhrzeit einer Atomuhr wie der TAI oder der UTC sein, welche überall auf der Welt, zeitzonenabhängig, gleich sein sollte. Es kann aber auch möglich sein, dass ein Slave S nur eine einzige Uhr enthält. Das kann dann oftmals eine Arbeitsuhr 3 sein, und es erfolgt keine Synchronisation auf die Globale Uhrzeit. Die Uhren in gegenständlicher Erfindung können jegliche Kombination von hardwarebasierter und logischer Uhr darstellen. Beispielsweise können sowohl Arbeitsuhr 3 als auch Globale Uhr 5 auf dieselbe hardwarebasierte Uhr zugreifen, es können aber auch sowohl Arbeitsuhr 3 als auch Globale Uhr 5 auf jeweils eine hardwarebasierte Uhr zugreifen.

Die Netzwerkteilnehmer sind über Netzwerkleitungen miteinander verbunden. Oftmals bilden die Netzwerkleitungen einen Datenbus zur Datenkommunikation zwischen den Netzwerkteilnehmern aus. Die Netzwerkleitungen können Lan-Kabel, Netzwerkbusse, Glasfaserkabel und ähnliches sein, welche eine Kommunikation im Netzwerk zwischen den Netzwerkteilnehmern erlauben. Zur Datenkommunikation kann ein beliebiges Kommunikationsprotokoll implementiert sein. Auch kann Netzwerkinfrastruktur vorgesehen sein, die verschiedene Netzwerke oder verschiedene Abschnitte eines Netzwerkes miteinander verbindet, beispielsweise Switches, Router usw. Auch drahtloser Datenverkehr mit Zeitsynchronisation über ein drahtloses Netzwerk, wie beispielsweise Wireless-Lan (WLAN), ist in einem Netzwerk 1, oder in Teilen von einem Netzwerk 1 denkbar. Alle Netzwerktopologien für das Netzwerk 1, die für den Fachmann geläufig sind, welche einen gezielten Datentransfer mit Zeitsynchronisation zwischen den Netzwerkteilnehmern ermöglichen, sind möglich. Das Netzwerk 1 ermöglicht im Sinne des Datenverkehrs (neben anderen Datennachrichten) das bidirektionale Senden und Empfangen von Synchronisationsnachrichten zwischen verschiedenen Netzwerkteilnehmern.

Die Synchronisationsnachrichten werden im Netzwerk 1 zwischen Netzwerkteilnehmern zur Zeitsynchronisation ausgetauscht. Einer der Master M1, M2 sendet dazu regelmäßig Synchronisationsnachrichten D1, D2 an den zumindest einen Slave S. Der Master M1 sendet eine Synchronisationsnachricht D1 zum Synchronisieren der Arbeitsuhr 3, und der Master M2 eine Synchronisationsnachricht D2 zum Synchronisieren der Globalen Uhr 5. Die Synchronisationsnachrichten D1, D2 können in einem Datenpaket, also in einer geschlossenen Dateneinheit, welche für den Netzwerkverkehr vorgesehen ist, versendet werden, die Synchronisationsnachrichten D1, D2 können aber auch unabhängig in verschiedenen Datenpaketen voneinander im Netzwerk 1 gesendet werden. Bevorzugterweise werden die Synchronisationsnachrichten D1 für die Arbeitsuhr 3 in einem höheren Intervall versendet, als Synchronisationsnachrichten D2 für die Globale Uhr 5. Oftmals kann die Arbeitsuhr 3 viermal sooft synchronisiert werden, verglichen zur Globalen Uhr 5.

Die Synchronisationsnachricht D1 enthält einen Zeitstempel t1 vom Master M1 und die Synchronisationsnachricht D2 enthält einen Zeitstempel t2 vom Master M2. Ein Zeitstempel t1, t2 ist der Zeitpunkt einer Arbeitsuhr 3 oder Globalen Uhr 5 eines Masters zum Zeitpunkt des Versendens einer Synchronisationsnachricht D. Die Synchronisationsnachrichten D1, D2 werden genutzt, um im Slave Seine Taktrate r und eine Zeitdifferenz dt zum Master M1, M2 zu berechnen und die Arbeitsuhr 3 oder Globale Uhr 5 so einzustellen, dass die Arbeitszeit und Globale Zeit zum Master gleich ist und auch gleich weiterläuft.

Die Taktrate r definiert ein periodisches Signal, das durch seine Frequenz oder Periodendauer bestimmt wird, und dient oftmals zur zeitlichen Koordination von Abläufen in einem digitalen System. Eine Taktrate r kann beispielsweise von einem Quarzoszillator in einer hardwarebasierten Uhr ausgegeben werden. Die Zeitdifferenz dt beschreibt die absolute Differenz von zwei Zeiten. Beispielsweise kann am Master M eine globale Zeit 11:23 sein und am Slave S eine globale Zeit 11:25. Dann würde die Zeitdifferenz dt 2 Minuten oder 120 Sekunden betragen.

Fig. 1 zeigt den Fluss der Synchronisation im Stand der Technik. Der Master M1 schickt zu bestimmten Zeitpunkten, die vorgegeben sein können oder sich beispielsweise auch aus einem Wechsel eines Masters M1 ergeben können, eine Synchronisationsnachricht D1 über das Netzwerk zu zumindest einem Slave S. Die Synchronisationsnachricht D1 erhält einen Zeitstempel t1 und hat eine Laufzeit im Netzwerk von Δt1. Die Laufzeit kann als bekannt angesehen werden oder kann zumindest abgeschätzt werden. Standardmäßig kann die Laufzeit Δt1 durch eigene Nachrichten gemessen werden. Die Synchronisationsnachricht D1 kommt bei einem Slave S, beispielsweise an einem Netzwerkport im Slave S, an und wird zur Arbeitsuhr 3 weitergereicht. Im Regelfall berechnet ein Zeitsynchronisationsmechanismus 7, 8 in jedem Slave S, beispielsweise in einer Uhr, die Abweichungen zum Master M1, M2. Die Arbeitsuhr 3, bzw. der Zeitsynchronisationsmechanismus der Arbeitsuhr 7, nutzt jetzt den Zeitstempel t1 und die bekannte Laufzeit Δt1, um sich daraus die Taktrate r1 und die Zeitdifferenz dt1 für die eigene Arbeitsuhr 3 zu errechnen und einen Zeitabgleich durchführen. Bei hohen Abweichungen zwischen Master M1 und Arbeitsuhr 3 im Slave S wird ein Zeitsprung durchgeführt und es wird auch die Taktrate r_{A} abgeglichen. Ein Abgleich der Taktrate r bedeutet, dass die Zeitdauer eines Takts im Slave S und im Master nach dem Abgleich gleich ist, und damit die Zeit gleich voranschreitet. Ein solcher Abgleich der Taktrate r kann beispielsweise erst nach einer bestimmten Anzahl an Synchronisationsnachrichten D1 möglich sein. Beispielsweise kann es bei kleinen Abweichungen nur nötig sein die Taktrate r_{A} anzugleichen, beispielsweise zu beschleunigen oder zu verzögern. Die Taktrate r kann dazu eine gewisse Zeitspanne beschleunigt werden, um eine Differenz auszugleichen, und kann dann beispielsweise 1,2 Sekunden statt 1 Sekunde pro Taktschlag vergehen lassen. Natürlich liegen die technisch üblichen Taktraten in wesentlich geringen Bereichen, beispielweise bei 8-10 ns (Nanosekunden). Bei kleinen Differenzen kann also eine Anpassung der Taktrate r (Frequenzanpassung) ausreichend sein.

Der Master M2 schickt ebenfalls eine Synchronisationsnachricht D2 an die Globale Uhr 5 im Slave S. Die Synchronisationsnachricht D2 erhält einen Zeitstempel t2 vom Master M2 und hat eine Laufzeit Δt2, die wieder als bekannt angesehen werden kann. Dadurch, dass die Rollen der Master M auf unterschiedlichen Netzwerkteilnehmern ausgeführt werden können, können sich die Laufzeiten der Synchronisationsnachrichten D1, D2 durchaus unterscheiden. Unterschiedliche Laufzeiten können sich aber beispielsweise auch dadurch ergeben, dass die Synchronisationsnachrichten D1, D2 über unterschiedliche Netzwerkpfade gesendet werden. Die Globale Uhr 5, bzw. der Zeitsynchronisationsmechanismus der Globalen Uhr 8, im Slave S errechnet die Taktrate r_{G} und die Zeitdifferenz dt2, wie oben für das erste Synchronisationsnachricht D1 beschrieben. Das kann über einen Zeitsprung oder eine Frequenzanpassung erfolgen, abhängig von der Abweichung zwischen Master M2 und Globaler Uhr 5 im Slave S.

Im Stand der Technik gibt es daher keine Interaktionen zwischen der Arbeitsuhr 3 und der Globalen Uhr 5. Jede wird für sich vom jeweiligen Master M1, M2 synchronisiert. Durch die Zeitsynchronisation mittels der ersten Synchronisationsnachricht D1 und zweiten Synchronisationsnachricht D2 kann es passieren, dass sowohl die Arbeitsuhr 3 also auch die Globale Uhr 5, Zeitsprünge vorwärts oder rückwärts ausführen und/oder eine Taktrate r_{A}, r_{G} einer oder jeder der beiden Uhren, also Arbeitsuhr 3 und/oder Globale Uhr 5, beschleunigt oder verzögert wird, um eine Zeitdifferenz zu einem der Master M1, M2 auszugleichen. Die Zeitsynchronisation im Stand der Technik kann daher dazu führen, dass die Arbeitsuhr 3 und die Globale Uhr 5 unterschiedliche Taktraten r_{A} und r_{G} aufweisen.

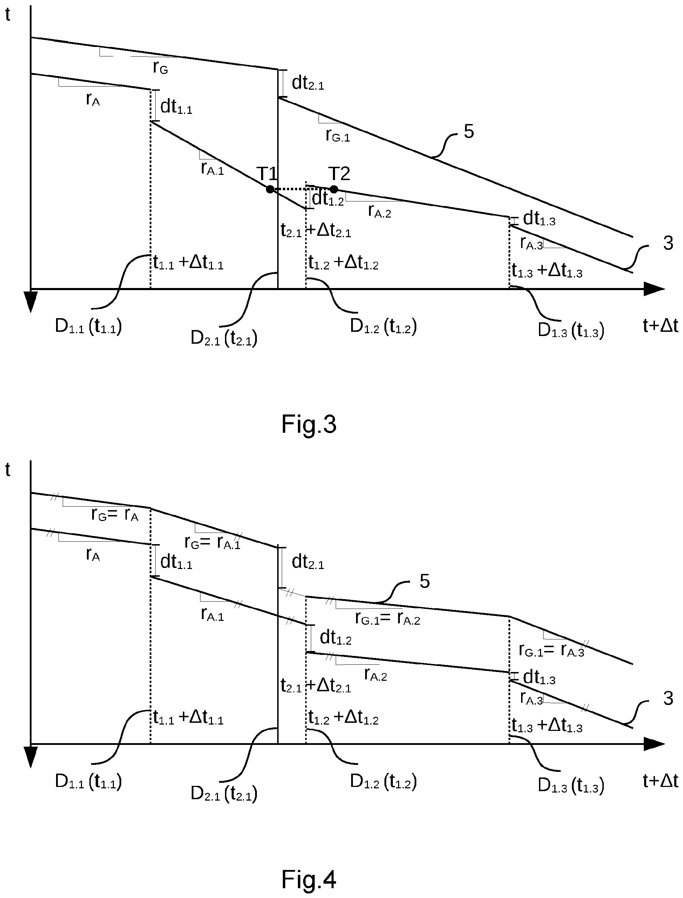

Fig. 3 zeigt einen beispielhaften Zeitverlauf während regelmäßiger Zeitsynchronisation der Arbeitsuhr 3 und der Globalen Uhr 5 im Stand der Technik. Zeitdifferenzen dt und Taktraten r sind immer relativ zu einem Master M1, M2 zu sehen. Die Ordinate beschreibt den Zeitverlauf der Zeitstempel t1, t2 und die Abszisse die Ankunft von neuen Synchronisationsnachrichten D(t) vom Master M in Abhängigkeit der Zeit und der Laufzeit t+Δt. Die Ankunft der Synchronisationsnachrichten ist nicht gleich, sondern abhängig von den Synchronisationsintervallen der Master M1 und M2. Die Arbeitsuhr 3 und die Globale Uhr 5 laufen initial jeweils mit der Taktrate r_{A} und r_{G}. Der Master M1 schickt die erste Synchronisationsnachricht D_{1.1} mit Zeitstempel t_{1.1} und diese kommt nach der Laufzeit Δt1 am Slave S an. Der Slave S vergleicht den Zeitstempel t_{1.1} der ersten Synchronisationsnachricht D_{1.1} mit der Arbeitszeit der Arbeitsuhr 3 und errechnet mit dem Zeitsynchronisationsmechanismus 7, beispielsweise der Arbeitsuhr 3, auf Basis der Abweichungen der Arbeitsuhr 3 zum Zeitstempel t_{1.1} eine neue Taktrate r_{A.1} und eine Zeitdifferenz dt_{1.1} für die Arbeitsuhr 3. Die Globale Uhr 5 hat noch keine Synchronisationsnachricht erhalten und läuft mit Taktrate r_{G} weiter. Die Arbeitsuhr 3 macht abhängig von der errechneten Zeitdifferenz dt_{1.1} einen Sprung als Resultat der Synchronisation und ändert die Taktrate r_{A.1}. Als nächstes erhält in diesem Beispiel der Slave S eine Synchronisationsnachricht D_{2.1} vom Master M2 für die Globale Uhr 5. Mittels des Zeitstempels t_{2.1} der Synchronisationsnachricht D_{2.1} wird eine Taktrate r_{G.1} und Zeitdifferenz dt_{2.1} mit dem globale Uhr Zeitsynchronisationsmechanismus 8 berechnet. Dadurch macht die Globale Uhr 5 einen Sprung und ändert die Taktrate r_{G.1} in Fig.3, was an der Steigung in Fig.3 sichtbar ist. In einer bevorzugten Ausführungsform wird ein Sprung nur nach der ersten Synchronisationsnachricht von sowohl der Arbeitsuhr 3, als auch der Globalen Uhr 5 durchgeführt und spätere Synchronisationsnachrichten D1, D2 können nur eine Änderung der Taktrate r_{A}, r_{G} hervorrufen. Der Prozess wiederholt sich zu unterschiedlichen Zeitpunkten. Die Laufzeiten Δt können zwischen den unterschiedlichen Synchronisationsnachrichten unterschiedlich sein, wenn beispielsweise ein anderer Master M bestimmt wird, sind dem Slave S aber bekannt.

Dieser Prozess kann sich, solange wiederholen, wie Synchronisationsnachrichten D1, D2 vom Master M1, M2 zur Zeitsynchronisation an den Slave S gesendet werden. Gleiche Zeitpunkte auf der Ordinate bei der gleichen Uhr mit dem gleichen Wert hätten den gleichen Zeitstempel t und wären dann nicht mehr unterscheidbar. Das ist beispielhaft in Fig. 3 bei der Arbeitsuhr 3 mit den Zeitstempeln T1 und T2 angedeutet. Ereignisse, die diesen Zeitstempel t, also T1 und T2, hätten, wären generell hinsichtlich der Zeitbasis nicht mehr unterscheidbar.

Fig. 2 zeigt die erfindungsgemäße Zeitsynchronisation in einem Netzwerk 1. Ein Master M1, M2 sendet, wie oben beschrieben, eine erste und eine zweite Synchronisationsnachricht D1 und D2. Die erste Synchronisationsnachricht D1 enthält auch im erfindungsgemäßen Fall einen Zeitstempel t₁, damit der Slave S die Arbeitsuhr 3 abgleichen kann. Die zweite Synchronisationsnachricht D2 enthält einen Zeitstempel t₂, um die Globale Uhr 5 abzugleichen. Die Globale Uhr 5 errechnet immer die Zeitdifferenz dt₂ zu einer Globalen Uhrzeit, die von einem Master M2 vorgegeben ist. Beides erfolgt über die Zeitsynchronisationsmechanismen 7, 8. Folglich ist zu jeder Synchronisationsnachricht D2 die Globale Uhrzeit zwischen dem Master M2 und dem Slave S abgeglichen. Die Taktrate r_{G} der Globalen Uhr 5 wird jedoch nicht über die Synchronisationsnachricht D2 angeglichen.

Die Taktrate r_{A} der Arbeitsuhr 3 wird nun verwendet, um der Globalen Uhr 5 die Taktrate r_{A} vorzugeben. Somit entspricht die Taktrate r_{A} der Arbeitsuhr 3 der Taktrate r_{G} der Globalen Uhr 5, also r_{A} = r_{G}. Es erfolgt dadurch ein Abgleich der Taktraten r_{A}, r_{G} im Slave S intern über die Vorgabe der Arbeitsuhr 3 und nicht wie bisher über eine Vorgabe vom Master M2, welcher eine zweite Synchronisationsnachricht D2 an den Slave S gesendet hat. Dadurch kommt es zu keinen unterschiedlichen Taktraten r_{A}, r_{G} zwischen Arbeitsuhr 3 und Globaler Uhr 5, wie im Stand der Technik. Das ist vorteilhaft, weil Applikationen wie ein Timer oder eine "monotonic clock", welche entweder mit Arbeitsuhr 3 oder Globaler Uhr 5 assoziiert sein können, jetzt immer auf die gleiche Taktrate r_{A} = r_{G} zugreifen.

In einem äußerst plakativen Beispiel kann die Taktrate r_{A} der Arbeitsuhr, welche auf Basis der ersten Synchronisationsnachricht D1 errechnet wird, nur mit 90% der Geschwindigkeit laufen, verglichen mit der Taktrate r_{G} einer globalen Uhr 5. Nach einer zweiten Synchronisationsnachricht D2 beispielsweise um 01:00 Uhr, ist die Globale Uhr 5 mit dem Master M2 an die Globale Uhrzeit abgeglichen. Die Uhren erhalten in dem Beispiel eine Stunde keine Synchronisationsnachrichten bis 02:00. Da die Taktrate r_{A} auf r_{G} abgeglichen ist, sind im Slave S in der Globalen Uhr nur 56 min vergangen und diese würde jetzt eine Uhrzeit von 01:56 anzeigen, obwohl es mittlerweile 02:00 Uhr ist. Mit der nächsten zweiten Synchronisationsnachricht D2 um 02:00 wird die Globale Uhr auf den Wert 02:00 gestellt und ist daher wieder synchron zur Globalen Uhrzeit.

Die Globale Uhr 5 macht daher auf Basis der zweiten Synchronisationsnachricht D2 oftmals Zeitsprünge. Diese können wesentlich kleiner sein als die Auflösung einer Globalen Uhr 5, und natürlich nicht die Größe (4 Minuten) wie im obigen Beispiel haben. Beispielsweise kann die Auflösung der Globalen Uhr 5 im Bereich von 1 Mikrosekunde (µS) liegen, die Zeitsprünge, welche aufgrund der ankommenden zweiten Synchronisationsnachrichten D2 errechnet werden, aber im Bereich kleiner 1 µS sein. Somit können solche Zeitsprünge für Applikationen und Anwendungen mit Bezug zu einem Anwender irrelevant sein, weil diese kleinen Abweichungen für einen Menschen als zeitgleich wahrgenommen werden.

Fig.4. zeigt einen beispielhaften Zeitverlauf während einer erfindungsgemäßen Zeitsynchronisation, die beispielsweise regelmäßig oder in gewissen definierten Zeitabständen erfolgen kann. Die Ordinate beschreibt den Zeitverlauf t und die Abszisse die Ankunft von neuen Synchronisationsnachrichten D(t) von einem Master M1, M2 in Abhängigkeit der Zeit und der Laufzeit t+Δt. Vor der erfindungsgemäßen Zeitsynchronisation, beispielsweise nach Initialisierung des Netzwerks 1, können die Arbeitsuhr 3 und Globale Uhr 5 mit unterschiedlichen Taktraten r_{A} für die Arbeitsuhr 3 und r_{G} für die Globale Uhr 5 laufen, was nicht in Fig.4 gezeigt wird. Die erste Synchronisationsnachricht D_{1.1} mit Zeitstempel t_{1.1} kommt nach Laufzeit Δt_{1.1} am Slave S an und die Arbeitsuhr 3 errechnet sich eine neue Taktrate r_{A.1}. In einer bevorzugten Ausführung kann die Arbeitsuhr 3 mit der zeitlich ersten Synchronisationsnachricht D_{1.1} auch eine Arbeits-Zeitdifferenz dt_{1.1} berechnen und macht einen Zeitsprung, wie schon oben beschrieben. Im Regelfall kann nachher auf Zeitsprünge verzichtet werden, da die Abweichung zwischen Master M1 und Arbeitsuhr 3 im Slave S klein genug ist, und dann nur mehr ein

Frequenzabgleich erfolgt. Die Taktrate r_{G} der Globalen Uhr 5 in Fig.4 ist erfindungsgemäß an die Taktrate r_{A} der Arbeitsuhr 3 angeglichen, ersichtlich durch die parallelen Steigungen in Fig. 4. In diesem Bereich kann es auch möglich sein, dass die Globale Uhr 5 falsch läuft, wie oben in dem plakativen Beispiel beschrieben. Die Globale Uhrzeit ist jedoch zum Zeitpunkt des Erreichens der zweiten Synchronisationsnachricht D2 wieder genau.

Nach einer weiteren Zeit erreicht die Synchronisationsnachricht D_{2.1} vom Master M2 den Slave S Der Zeitsynchronisationsmechanismus 8, z.B. der Globalen Uhr 5, berechnet über die zweite Synchronisationsnachricht D2 die Globale Zeitdifferenz dt_{2.1}. Zum Zeitpunkt der Verarbeitung durch den Synchronisationsmechanismus 8 ist die Globale Uhrzeit mit der vom Master M2 erhaltenen Globalen Uhrzeit ident. Danach läuft sie mit der Taktrate r_{A} der Arbeitsuhr weiter. Dieses Prozedere wiederholt sich mit Ankunft einer jeden ersten und zweiten Synchronisationsnachrichten D_{1.n} und D_{2.n} zur Zeitsynchronisation von den Mastern M1 und M2.

Der Slave S kann auch Datenverkehr ins Netzwerk 1 senden, beispielsweise über Datenpakete Dp, welche verschiedene Ereignisse steuern können, und nicht nur bezüglich der Zeitsynchronisation agieren. Ein Datenpaket kann dazu beispielsweise einen Netzwerkport nutzen. Für die meisten Anwendungen kann es nötig sein dem Datenpaket einen Zeitstempel t zu geben. Das kann über einen Timestamper im Slave S erfolgen, welcher einem ausgehenden Datenpaket einen Zeitstempel t des Slaves S gibt. Ein Zeitstempel t ist der Zeitpunkt der Arbeitsuhr 3 oder der Globalen Uhr 5 im Slave S zum Zeitpunkt des Datenpaketes. Der Zeitstempel t kann auch wichtig sein, um den Datenverkehr in einem Netzwerk 1 zu regeln. Abhängig vom Ereignis kann die Arbeitsuhr 3 auf einen Arbeits-Timestamper oder die Globale Uhr 5 auf einen Globalen-Timestamper zugreifen. Wenn ein Ereignis einen Zeitstempel t der Arbeitsuhr 3 bekommen soll, wird dieser vom Arbeits-Timestamper durchgeführt. Bei der Globalen Uhr 5 übernimmt diese Funktionalität der Globale-Timestamper. Bei Ereignissen mit Nähe zu einem Anwender kann beispielsweise der globale Zeitstempel t5 der Globalen Uhr 5 verwendet werden, während bei Kommunikationsereignissen zwischen Netzwerkteilnehmern, beispielsweise bei Ereignissen, wie abgestimmten Produktionsinteraktionen, der Arbeits-Zeitstempel t3 der Arbeitsuhr 3 verwendet werden kann.

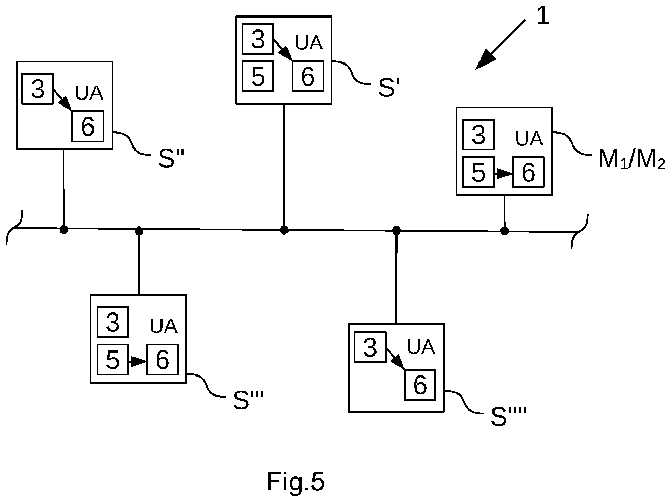

Fig. 5 zeigt in einer bevorzugten Ausführungsform ein Netzwerk 1 mit Timern 6, welches die erfindungsgemäße Zeitsynchronisation verwendet. Zur Anschaulichkeit sind beide Masterrollen M1, M2 in einem Netzwerkteilnehmer angeordnet. Die Netzwerkteilnehmer sind in einer Netzwerktopologie angeordnet. Der erste und der zweite Master M1, M2 senden erfindungsgemäß die Synchronisationsnachrichten D1, D2 über das Netzwerk 1 an eine Mehrzahl an Slaves S. Jeder Netzwerkteilnehmer, also sowohl Master M1, M2 als auch die Slaves S bezüglich der Zeitsynchronisation, hat einen Timer 6. Ein Timer 6 gibt in regelmäßigen Intervallen, beispielsweise jede 1 Millisekunde (ms) eine Unterbrechungsanforderung (Interrupt) UA. Das kann vor allem für zyklische Applikationen wichtig sein, welche auf allen Netzwerkteilnehmern gleichzeitig oder mit vorgegebener Abfolge erfolgen sollten. Beispielsweise greifen Systeme für einen Produktionsablauf auf den Timer 6 zu, und schalten im einfachsten Fall ein Ventil zu einer vorgegebenen Unterbrechungsanforderung UA.

Daher muss ein Timer 6 an jedem Gerät nach einem gewissen Zeitablauf die Unterbrechungsanforderung UA ausgeben. Laufen die Taktraten in den Slaves S unterschiedlich, kommen die Unterbrechungsanforderungen UA zu unterschiedlichen Zeitpunkten. Das kann beispielsweise Fehler und Probleme in hochgenauen Produktionsabläufen auslösen.

In einer Netztopologie können eine Vielzahl von unterschiedlichen Netzwerkteilnehmern, wie Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren sein und entsprechend auf unterschiedlichsten Betriebssystemen laufen, wie Linux/Unix, Windows, Android und ähnliches. Abhängig vom Netzwerkteilnehmer und dessen Betriebssystem greift ein Timer 6 auf Basis der Voreinstellungen auf eine Arbeitsuhr 3 oder auf eine Globale Uhr 5 zu. Manche Netzwerkeilnehmer wie S" oder S‴ haben nur eine Arbeitsuhr 3 und der Timer 6 greift dementsprechend auf die Arbeitsuhr 3 zu.

Im Stand der Technik müsste jeder Timer 6 im Netzwerk 1 eingestellt werden, um auf eine einheitliche Uhr zuzugreifen, beispielsweise die Globale Uhr 5. Das würde aber Probleme verursachen bei Netzwerkteilnehmern ohne Globale Uhr 5. Bei Abgleich auf die Arbeitsuhr 3 würde man, wie oben beschrieben, die Vorteile der Globalen Uhrzeit verlieren.

Die erfindungsgemäße Zeitsynchronisation ermöglicht es, dass im Netzwerk 1 ein Timer 6 auf beliebige Uhren im Netzwerkteilnehmer zurückgreifen kann, und die Unterbrechungsanforderung UA überall nach der gleichen Zeitspanne stattfindet. So kann eine Steuerung von beispielsweise Produktionsabläufen hochgenau geplant und realisiert werden.

## Patentansprüche

1. Verfahren zur Zeitsynchronisation in einem Netzwerk (1), wobei das Netzwerk (1) eine Mehrzahl an Mastern (M1, M2) und zumindest einen Slave (S) enthält, wobei der zumindest eine Slave (S) von der Mehrzahl an Mastern (M1, M2) Synchronisationsnachrichten (D1, D2) zur Zeitsynchronisation einer ersten Uhr (3) und einer zweiten Uhr (5) des Slaves (S) über das Netzwerk (1) erhält,
wobei ein erster Master (M1) eine erste Synchronisationsnachricht (D1) mit einem ersten Zeitstempel (t1) zur Zeitsynchronisation der ersten Uhr (3) an den zumindest einen Slave (S) sendet und der zumindest eine Slave (S) den ersten Zeitstempel (t₁) der ersten Synchronisationsnachricht (D1) mit der ersten aktuellen Zeit der ersten Uhr (3) vergleicht und auf Basis dieses Vergleichs eine Taktrate (r_{A}) und eine Zeitdifferenz (dt₁) der ersten Uhr (3) zum ersten Master (M1) ermittelt und einen Zeitabgleich derart durchführt, dass die erste Uhr (3) im Slave (S) mit der synchronisierten Zeit läuft,
wobei ein zweiter Master (M2) eine zweite Synchronisationsnachricht (D2) mit einem zweiten Zeitstempel (t₂) zur Zeitsynchronisation der zweiten Uhr (5) an den zumindest einen Slave (S) sendet,
**dadurch gekennzeichnet, dass** die Taktrate (r_{A}) der ersten Uhr (3) genutzt wird, um der zweiten Uhr (5) eine Taktrate (r_{G}) vorzugeben, indem die Taktrate (r_{G}) der zweiten Uhr (5) auf die Taktrate (r_{A}) der ersten Uhr (3) gesetzt wird,
**und dass** der zumindest eine Slave (S) den zweiten Zeitstempel (t₂) der zweiten Synchronisationsnachricht (D2) mit der zweiten aktuellen Zeit der zweiten Uhr (5) vergleicht und auf Basis dieses Vergleichs eine Zeitdifferenz (dt₂) der zweiten Uhr (5) zum zweiten Master (M2) ermittelt und einen Zeitabgleich derart durchführt, dass dadurch die zweite Uhr (5) im Slave (S) mit der synchronisierten Zeit läuft.

2. Verfahren nach Anspruch 1, **dadurch gekennzeichnet, dass** eine Zeitsynchronisation in Intervallen zwischen von 10 - 200 ms erfolgt.

3. Verfahren nach einem der Ansprüche 1 oder 2, **dadurch gekennzeichnet, dass** im Slave (S) ein Timestamper (8) mit einer ersten Uhr (3) und/oder einer zweiten Uhr (5) assoziiert ist und einem Datenpaket einen Zeitstempel (t) zuordnet.

4. Verfahren nach einem der Ansprüche 1 bis 3, **dadurch gekennzeichnet, dass** eine Zeitsynchronisation im zumindest einen Slave (S) über Synchronisation erfolgt und eine Taktrate (r) und eine Zeitdifferenz (dt) errechnet wird, und die Zeitdifferenz (dt) der ersten Uhr (3) und/oder zweiten Uhr (5) zum Master (M1, M2) über einen Zeitsprung und/oder einen Frequenzabgleich ausgeglichen wird.

5. Verfahren nach einem der Ansprüche 1 bis 3, **dadurch gekennzeichnet, dass** eine Zeitsynchronisation im zumindest einen Slave (S) über Syntonisation erfolgt und eine Taktrate (r) und eine Zeitdifferenz (dt) errechnet wird, und die Zeitdifferenz (dt) der ersten Uhr (3) und/oder zweiten Uhr (5) zum Master (M1, M2) über eine Anpassung der Taktrate (r) ausgeglichen wird.

6. Verfahren nach einem der Ansprüche 1 bis 5, **dadurch gekennzeichnet, dass** ein Timer (6) mit einer ersten Uhr (3) und/oder mit einer zweiten Uhr (5) assoziiert ist, und in regelmäßigen Intervallen eine Unterbrechungsanforderung (UA) ausgibt.

7. Netzwerk (1) bestehend aus einer Mehrzahl an Mastern (M1, M2) und zumindest einem Slave (S), wobei die Mehrzahl an Mastern (M1, M2) und der zumindest eine Slave (S) sowohl je eine erste Uhr (3) als auch je eine zweite Uhr (5) enthalten,
wobei der erste Master (M1) eingerichtet ist, eine erste Synchronisationsnachricht (D1), mit einem ersten Zeitstempel (t₁) über das Netzwerk (1) an den zumindest einen Slave (S) zu senden, und der zumindest eine Slave (S) ausgebildet ist, auf Basis des ersten Zeitstempels (t₁) eine Taktrate (r_{A}) und eine erste Zeitdifferenz (dt₁) zur ersten aktuellen Zeit der ersten Uhr (3) in Relation zum ersten Master (M1) zu ermittelten und einen Zeitabgleich derart durchzuführen, dass die erste Uhr (3) im Slave (S) mit der synchronisierten Zeit läuft, wobei der zweite Master (M2) eingerichtet ist, eine zweite Synchronisationsnachricht (D1), mit einem zweiten Zeitstempel (t₂) über das Netzwerk (1) an den zumindest einen Slave (S) zu senden,
**dadurch gekennzeichnet, dass,** der zumindest eine Slave (S) ausgebildet ist, um die Taktrate (r_{A}) der ersten Uhr (3) der zweiten Uhr (5) als Taktrate (r_{G}) vorzugeben, und um die Taktrate (r_{G}) der zweiten Uhr (5) auf die Taktrate (r_{A}) der ersten Uhr (3) zu setzen,
**und dass,** der zumindest eine Slave (S) ausgebildet ist, auf Basis des zweiten Zeitstempels (t₂) eine zweite Zeitdifferenz (dt₂) der zweiten aktuellen Zeit der zweiten Uhr (3) in Relation zum zweiten Master (M2) zu ermitteln und einen Zeitabgleich derart durchzuführen, dass die zweite Uhr (5) im Slave (S) mit der synchronisierten Zeit läuft.

## Claims

1. A method for time synchronization in a network (1), the network (1) comprising a plurality of masters (M1, M2) and at least one slave (S), the at least one slave (S) receiving synchronization messages (D1, D2) from the plurality of masters (M1, M2) for the time synchronization of a first clock (3) and a second clock (5) of the slave (S) via the network (1),
a first master (M1) sending a first synchronization message (D1) having a first time stamp (t1) to the at least one slave (S) for the time synchronization of the first clock (3) and the at least one slave (S) comparing the first time stamp (t1) of the first synchronization message (D1) with the first current time of the first clock (3) and, based on this comparison, calculating a clock rate (r_{A}) and a time difference (dt1) between the first clock (3) and the first master (M1) and carrying out a time alignment in such a way that the first clock (3) in the slave (S) runs with the synchronized time,
a second master (M2) sending a second synchronization message (D2) having a second time stamp (t2) to the at least one slave (S) for the time synchronization of the second clock (5),
**characterized in that** the clock rate (r_{A}) of the first clock (3) is used to specify a clock rate (r_{G}) for the second clock (5), by setting the clock rate (r_{G}) of the second clock (5) to the clock rate (r_{A}) of the first clock (3),
**and in that** the at least one slave (S) compares the second time stamp (t2) of the second synchronization message (D2) with the second current time of the second clock (5) and, based on this comparison, calculates a time difference (dt2) between the second clock (5) and the second master (M2) and carries out a time alignment in such a way that the second clock (5) in the slave (S) runs with the synchronized time.

2. The method according to claim 1, **characterized in that** time synchronization takes place at intervals of between 10 and 200 ms.

3. The method according to any of claims 1 or 2, **characterized in that** a time stamper (8) is associated with a first clock (3) and/or a second clock (5) in the slave (S) and assigns a time stamp (t) to a data packet.

4. The method according to any of claims 1 to 3, **characterized in that** time synchronization takes place in at least one slave (S) via synchronization and a clock rate (r) and a time difference (dt) are calculated, and the time difference (dt) between the first clock (3) and/or the second clock (5) and the master (M1, M2) is compensated for by a time jump and/or a frequency alignment.

5. The method according to any of claims 1 to 3, **characterized in that** time synchronization takes place in at least one slave (S) via syntonization and a clock rate (r) and a time difference (dt) are calculated, and the time difference (dt) between the first clock (3) and/or the second clock (5) and the master (M1, M2) is compensated for by adjusting the clock rate (r).

6. The method according to any of claims 1 to 5, **characterized in that** a timer (6) is associated with a first clock (3) and/or with a second clock (5) and issues an interrupt request (UA) at regular intervals.

7. A network (1) comprising of a plurality of masters (M1, M2) and at least one slave (S), the plurality of masters (M1, M2) and the at least one slave (S) both having a first clock (3) and a second clock (5) each,
the first master (M1) being configured to send a first synchronization message (D1) having a first time stamp (t1) to the at least one slave (S) via the network (1), and the at least one slave (S) being designed to calculate a clock rate (r_{A}) and a first time difference (dt1) relative to the first current time of the first clock (3) in relation to the first master (M1) on the basis of the first time stamp (t1) and carry out a time alignment in such a way that the first clock (3) in the slave (S) runs with the synchronized time,
the second master (M2) being configured to send a second synchronization message (D1) having a second time stamp (t2) to the at least one slave (S) via the network (1), **characterized in that** the at least one slave (S) is designed to specify the clock rate (r_{A}) of the first clock (3) as a clock rate (r_{G}) for the second clock (5), and to set the clock rate (r_{G}) of the second clock (5) to the clock rate (r_{A}) of the first clock (3),
**and in that** the at least one slave (S) is designed to calculate a second time difference (dt2) between the second current time of the second clock (3) and the second master (M2) on the basis of the second time stamp (t2) and carry out a time alignment in such a way that the second clock (5) in the slave (S) runs with the synchronized time.

## Revendications

1. Procédé de synchronisation temporelle dans un réseau (1), le réseau (1) contenant une pluralité de maîtres (M1, M2) et au moins un esclave (S), l'au moins un esclave (S) recevant, de la pluralité de maîtres (M1, M2), des messages de synchronisation (D1, D2) pour la synchronisation temporelle d'une première horloge (3) et d'une deuxième horloge (5) de l'esclave (S) par le biais du réseau (1),
un premier maître (M1) envoyant un premier message de synchronisation (D1) avec un premier horodatage (t1) pour la synchronisation temporelle de la première horloge (3) à l'au moins un esclave (S) et l'au moins un esclave (S) comparant le premier horodatage (t₁) du premier message de synchronisation (D1) au premier temps actuel de la première horloge (3) et, sur la base de cette comparaison, déterminant une fréquence d'horloge (r_{A}) et une différence de temps (dt₁) de la première horloge (3) par rapport au premier maître (M1) et effectuant une compensation horaire de telle sorte que la première horloge (3) dans l'esclave (S) fonctionne avec le temps synchronisé,
un deuxième maître (M2) envoyant un deuxième message de synchronisation (D2) avec un deuxième horodatage (t₂) pour la synchronisation temporelle de la deuxième horloge (5) à l'au moins un esclave (S),
**caractérisé en ce que** la fréquence d'horloge (r_{A}) de la première horloge (3) est utilisée pour imposer à la deuxième horloge (5) une fréquence d'horloge (r_{G}) en fixant la fréquence d'horloge (r_{G}) de la deuxième horloge (5) à la fréquence d'horloge (r_{A}) de la première horloge (3),
et **en ce que** l'au moins un esclave (S) compare le deuxième horodatage (t₂) du deuxième message de synchronisation (D2) au deuxième temps actuel de la deuxième horloge (5) et, sur la base de cette comparaison, détermine une différence de temps (dt₂) de la deuxième horloge (5) par rapport au deuxième maître (M2) et effectue une compensation horaire de telle sorte que la deuxième horloge (5) dans l'esclave (S) fonctionne ainsi avec le temps synchronisé.

2. Procédé selon la revendication 1, **caractérisé en ce qu'**une synchronisation temporelle est effectuée à des intervalles compris entre 10 et 200 ms.

3. Procédé selon l'une des revendications 1 ou 2, **caractérisé en ce que** dans l'esclave (S), un horodateur (8) est associé à une première horloge (3) et/ou à une deuxième horloge (5) et attribue un horodatage (t) à un paquet de données.

4. Procédé selon l'une des revendications 1 à 3, **caractérisé en ce qu'**une synchronisation temporelle est effectuée dans au moins un esclave (S) par le biais d'une synchronisation et une fréquence d'horloge (r) et une différence de temps (dt) sont calculées, et la différence de temps (dt) de la première horloge (3) et/ou de la deuxième horloge (5) par rapport au maître (M1, M2) est compensée par un saut temporel et/ou une compensation de fréquence.

5. Procédé selon l'une des revendications 1 à 3, **caractérisé en ce qu'**une synchronisation temporelle est effectuée dans au moins un esclave (S) par le biais d'une syntonisation et une fréquence d'horloge (r) et une différence de temps (dt) sont calculées, et la différence de temps (dt) de la première horloge (3) et/ou de la deuxième horloge (5) par rapport au maître (M1, M2) est compensée par une adaptation de la fréquence d'horloge (r) .

6. Procédé selon l'une des revendications 1 à 5, **caractérisé en ce qu'**un temporisateur (6) est associé à une première horloge (3) et/ou à une deuxième horloge (5) et délivre une demande d'interruption (UA) à intervalles réguliers.

7. Réseau (1) constitué d'une pluralité de maîtres (M1, M2) et d'au moins un esclave (S), la pluralité de maîtres (M1, M2) et l'au moins un esclave (S) contenant chacun à la fois une première horloge (3) ainsi qu'une deuxième horloge (5),
le premier maître (M1) étant conçu pour envoyer un premier message de synchronisation (D1), avec un premier horodatage (t₁), par le biais du réseau (1) à l'au moins un esclave (S), et l'au moins un esclave (S) étant configuré pour déterminer, sur la base du premier horodatage (t₁), une fréquence d'horloge (r_{A}) et une première différence de temps (dt₁) par rapport au premier temps actuel de la première horloge (3) en relation avec le premier maître (M1) et effectuer une compensation horaire de telle sorte que la première horloge (3) dans l'esclave (S) fonctionne avec le temps synchronisé, le deuxième maître (M2) étant conçu pour envoyer un deuxième message de synchronisation (D1), avec un deuxième horodatage (t₂), par le biais du réseau (1) à l'au moins un esclave (S),
**caractérisé en ce que** l'au moins un esclave (S) est configuré pour préindiquer la fréquence d'horloge (r_{A}) de la première horloge (3) à la deuxième horloge (5) en tant que fréquence d'horloge (r_{G}) et pour fixer la fréquence d'horloge (r_{G}) de la deuxième horloge (5) à la fréquence d'horloge (r_{A}) de la première horloge (3),
et **en ce que** l'au moins un esclave (S) est configuré pour déterminer, sur la base du deuxième horodateur (t₂), une deuxième différence de temps (dt₂) du deuxième temps actuel de la deuxième horloge (3) par rapport au deuxième maître (M2) et pour effectuer une compensation horaire de telle sorte que la deuxième horloge (5) dans l'esclave (S) fonctionne avec le temps synchronisé.
